# EUROPÄISCHE PATENTSCHRIFT

(11) **EP 0 857 621 B1**
(45) Veröffentlichungstag und Bekanntmachung des Hinweises auf die Patenterteilung: **21.11.2001**
(21) Anmeldenummer: 97122154.4
(22) Anmeldetag: 16.12.1997
(51) Int. Cl.: B60R 21/16

(54) **Verfahren zum Zusammenlegen eines Seitenaufprall-Gassacks für ein Fahrzeuginsassen-Rückhaltesystem, zusammengelegter Seitenaufprall-Gassack sowie Vorrrichtung zum Zusammenlegen eines Seitenaufprall-Gassacks**
Process for folding a side-impact airbag for a vehicle passengers restraint system, folded side-impact airbag and device to fold a side-impact airbag
Procédé de pliage d'un coussin gonflable pour choc latéral pour un système de retenue de passagers d'un véhicule, coussin gonflable pour choc latéral plié et dispositif pour le pliage d'un coussin gonflable pour choc latéral

(30) Priorität: 07.02.1997 DE 19704670
(43) Veröffentlichungstag der Anmeldung: 12.08.1998
(73) Patentinhaber: TRW Occupant Restraint Systems GmbH & Co. KG, 73551 Alfdorf (DE)
(72) Erfinder: Aich, Josef, 73540 Heubach/Lautern (DE); Lang, Norbert, 73575 Leinzell (DE)
(74) Vertreter: Degwert, Hartmut, Dipl.-Phys.

(56) Entgegenhaltungen:
- DE-A- 19 702 799
- DE-C- 19 516 494
- US-A- 5 300 011
- US-A- 5 360 387

## Beschreibung

Die Erfindung betrifft ein Verfahren zum Zusammenlegen eines Seitenaufprall-Gassacks für ein Fahrzeuginsassen-Rückhaltesystem, einen zusammengelegten Seitenaufprall-Gassack sowie eine Vorrichtung zum Zusammenlegen eines Seitenaufprall-Gassacks.

Ein Rückhaltesystem für einen Fahrzeuginsassen besteht üblicherweise aus einer Druckgasquelle, einer Auslösesensorik für diese sowie einem Gassack, der mit der Druckgasquelle in Strömungsverbindung steht und nach Zünden der Druckgasquelle aus einem platzsparenden, zusammengelegten Zustand in einen aufgeblasenen Zustand überführt werden kann, in welchem er eine Rückhaltewirkung für einen Fahrzeuginsassen bereitstellen kann.

An die Art und Weise, in welcher der Gassack zusammengelegt ist, werden eine Reihe von Anforderungen gestellt. Zum einen soll der zusammengelegte Gassack möglichst schnell in den aufgeblasenen Zustand überführbar sein. Außerdem soll der Gassack automatisch zusammenlegbar sein. Schließlich soll sich der Gassack so entfalten, daß keine Wandungsteile des sich entfaltenden Gassacks auf einem zurückzuhaltenden Fahrzeuginsassen aufprallen.

Die DE-C1-195 16 494 stellt ein Verfahren zur Faltung eines Gassacks vor, bei dem ein Gassack in einer Vorrichtung auf einer plattenförmigen Unterlage ausgebreitet wird, die einen kleineren Durchmesser aufweist als der unaufgeblasene Gassack. Der Gassack wird anschließend aufgeblasen und durch ein zur ersten Unterlage paralleles Gegenteil zusammengepreßt, wobei Teile des aufgeblasenen Gassacks seitlich zwischen den beiden Platten herausquellen. In diese herausquellenden Bereiche werden von zwei gegenüberliegenden Seiten parallel zur Unterlage liegende Faltschwerter eingeführt, so daß zwischen der Unterlage und dem Gegenteil parallel liegende Fallen gebildet werden. Nach dem Evakuieren des Gassacks wird das Gassackgewebe in der zu den gefalteten Bereichen senkrechten Ebene durch weitere Faltschwerter zickzackförmig gefaltet und ohne die Ausbildung von weiteren Falten zusammengeschoben.

In der US-5 300 011 ist eine Vorrichtung zur automatisierten Faltung eines Gassacks vorgestellt, in der der Gassack im Verlauf des in dieser Vorrichtung durchgeführten Faltungsverfahrens aufgeblasen und wieder evakuiert wird. In einem Verfahrensschritt werden Abschnitte von gegenüberliegenden Wandungen des aufgeblasenen Gassacks in dessen Inneres hineingefaltet. Der Gassack wird nur teilweise von einer Unterlage unterstützt, um der Faltvorrichtung Angriffspunkte am Gassack zu bieten, damit Abschnitte des Gassacks umgeschlagen werden können.

Aus der US-5 360 387 ist eine Vorrichtung zur Faltung eines Gassack bekannt, in der der Gassack zwischen zwei Platten gelegt wird und von außen ein Unterdruck an den Gassack angelegt wird, um ihn mit Hilfe dieser Platten auseinanderziehen zu können. Mit Hilfe von Faltschiebern werden dann von zwei gegenüberliegenden Seiten Abschnitte der Gassackwandung in genau definierten, zu den Platten parallelen Falten in das Innere des Gassacks geschoben.

Durch die Erfindung wird ein Verfahren zum Zusammenlegen eines Seitenaufprall-Gassacks bereitgestellt, das zum einen automatisch ohne manuelle Schritte ausgeführt werden kann und zum anderen zu einem zusammengelegten Gassack führt, der in besonders vorteilhafter Weise entfaltet werden kann. Gemäß der Erfindung enthält das Verfahren die folgenden Schritte: Der Gassack wird zuerst auf einer Unterlage ausgebreitet. Anschließend wird die Berandung der Einblasöffnung des Gassacks fixiert. Danach wird eine Platte in einem vorbestimmten Abstand von der Unterlage und parallel zu dieser angeordnet, so daß der Gassack zwischen der Unterlage und der Platte liegt. Anschließend wird der Gassack zwischen der Unterlage und der Platte aufgeblasen. Ein Teil der Wandung des Gassacks wird in dessen Innenraum hinein eingestülpt, und die Wandung des Gassacks wird so vom außen nach innen zusammengeschoben, daß die Wandung eine Vielzahl von unregelmäßig verlaufenden Einzelfalten auf-. Auf diese Weise wird ein sehr kompakt zusammengefalteter Seitenaufprall-Gassack erhalten, der dennoch leicht zu entfalten ist. Im Vergleich mit herkömmlichen Faltungsverfahren konnte eine Verbesserung der Entfaltungszeit des Gassacks beobachtet werden. Ferner wurde ein gleichmäßigeres Entfalten des Gassacks sowie ein verbessertes Öffnungsverhalten einer den zusammengelegten Gassack schützenden Abdeckung beobachtet. Ein mit dem erfindungsgemäßen Verfahren zusammengelegter Gassack positioniert sich bereits während des Entfaltens in besonders vorteilhafter Weise im Innenraum des Fahrzeugs. Durch das besonders gleichmäßige Entfalten des Gassacks werden dessen Nähte und dessen Gewebe geringer als bei Gassäcken belastet, die mit herkömmlichen Verfahren gefaltet sind. Bedingt durch das verbesserte Verhalten beim Entfalten wurde ein Aufprallen von Wandungsteilen des sich entfaltenden Gassacks auf einen zurückzuhaltenden Fahrzeuginsassen nur in deutlich geringerem Maße und mit deutlich geringerer Energie als bei Gassäcken beobachtet, die mit herkömmlichen Verfahren gefaltet sind. Die besondere Art des Zusammenlegens des Gassacks mit einem erfindungsgemäßen Verfahren unterstützt besonders den speziellen Entfaltungsvorgang bei einem Seitenaufprall-Gassack, der sich überwiegend in einer einzigen Ebene entfaltet, während er sich, bedingt durch die geringe Tiefe des zur Verfügung stehenden Raums, quer zu dieser Ebene nur in vergleichsweise geringem Ausmaß entfaltet.

Gemäß einer bevorzugten Ausführungsform des erfindungsgemäßen Verfahrens ist vorgesehen, daß außerdem die folgenden Schritte ausgeführt werden: Zuerst wird die Wandung des Gassacks entlang einem Rand der Gassacks umgeschlagen. Anschließend wird der umgeschlagene Teil der Wandung in dieser Stellung fixiert. Danach wird die Wandung an einem zum genannten ersten Rand im wesentlichen senkrechten zweiten Rand des Gassacks zur Einblasöffnung hin geschoben. Danach wird die Wandung an einem zum ersten Rand des Gassacks entgegengesetzten dritten Rand zur Einblasöffnung hin geschoben. Schließlich wird die Wandung an einem zum zweiten Rand des Gassacks entgegengesetzten vierten Rand zur Einblasöffnung hin geschoben. Bei dieser Abfolge der verschiedenen Schritte des Zusammenschiebens der Wandung des Gassacks ergibt sich ein besonders geringes Packvolumen. Dies wird insbesondere dann erzielt, wenn die Wandung des Gassacks in dessen Innenraum hinein eingestülpt wird, bevor die Wandung an dem dritten Rand des Gassacks zur Einblasöffnung hin geschoben wird.

Gemäß der bevorzugten Ausführungsform der Erfindung ist weiterhin vorgesehen, daß die Wandung ausgehend von einer Stelle, die gegenüber dem Schnittpunkt zwischen dem ersten und dem zweiten Rand liegt, zur Mitte des Gassacks hin in dessen Innenraum hinein eingestülpt wird. Bei dieser Reihenfolge der verschiedenen Verfahrensschritte ergibt sich ein besonders gleichmäßiges Entfalten des Gassacks. Gemäß der bevorzugten Ausführungsform der Erfindung ist weiterhin vorgesehen, daß während des Zusammenlegens ein Unterdruck an den Innenraum des Gassacks angelegt wird, vorzugsweise nach dem Einstülpen der Wandung. Auf diese Weise wird verhindert, daß beim Zusammenschieben der Wandung des Gassacks zwischen den sich bildenden einzelnen Falten Luft eingeschlossen wird, die zu einem erhöhten Packvolumen führen würde.

Durch die Erfindung wird auch ein zusammengelegter Seitenaufprall-Gassack für ein Fahrzeuginsassen-Rückhaltesystem geschaffen, der im aufgeblasenen Zustand die Form eines Kissens hat, mit einem ersten und einem dazu im wesentlichen senkrechten zweiten Rand, und der mit einer Einblasöffnung in einer der Seitenflächen versehen ist, dadurch gekennzeichnet, daß ein Teil der Wandung an einer Stelle, die gegenüber dem Schnittpunkt zwischen dem ersten und dem zweiten Rand des Gassacks liegt; in das Innere des Gassacks eingestülpt ist und daß die Wandung des Gassacks eine Vielzahl von unregelmäßig verlaufenden Einzelfalten aufweist. Durch die Einstülpung eines Teils der Wandung des Gassacks nach innen wird ein besonders geringes Volumen des zusammengelegten Gassacks erhalten.

Ein Gassack mit einer Wandung, die eine Vielzahl von unregelmäßig verlaufenden Einzelfalten aufweist, wurde möglich durch die Erkenntnis, daß es für ein vorteilhaftes Entfalten des Gassacks während des Aufblasens nicht notwendig ist, den Gassack mittels genau vorgegebener, vergleichsweise großer Falten zusammenzufalten, wie dies im Stand der Technik vorgesehen ist. Auch mit einem zusammengeschobenen Gassack, bei dem der Verlauf der Wandung im zusammengeschobenen Zustand durch gewisse Parameter lediglich grob vorgegeben ist, jedoch nicht im Detail reproduzierbar ist, läßt sich ein reproduzierbarer Entfaltungsvorgang beim Aufblasen erreichen. Da keine vergleichsweise großen Falten beim Aufblasen des Gassacks entfaltet werden müssen, läuft der Entfaltungsvorgang besonders schnell ab.

Gemäß einer bevorzugten Ausführungsform ist vorgesehen, daß der Gassack eine im wesentliche ebene Oberseite und eine im wesentlichen ebene Unterseite hat, in deren Ebene die Einblasöffnung liegt. Weiterhin ist vorzugsweise vorgesehen, daß der Gassack einen im wesentlichen rechteckigen Umfang hat. Auf diese Weise ist der Gassack in optimaler Weise an die üblicherweise für seine Aufnahme vorgesehenen Unterbringungsräume angepaßt, die im wesentlichen rechteckig sind.

Durch die Erfindung ist auch eine Vorrichtung zum Zusammenlegen eines Seitenaufprall-Gassacks für ein Fahrzeuginsassen-Rückhaltesystem geschaffen, mit einer Unterlage, auf der ein zusammenzulegender Gassack ausgebreitet werden kann, einer Spannvorrichtung, mit der die Berandung der Einblasöffnung fixiert werden kann, einer Platte, die parallel zu der Unterlage und in einem Abstand von dieser angeordnet werden kann, einer Vorrichtung zur Druckbeaufschlagung des Innenraums des mittels der Spannvorrichtung fixierten Gassacks, sowie mehreren Schiebern, die zwischen einer von dem Umfang des zwischen der Unterlage und der Platte entfalteten Gassacks beabstandeten Stellung und einer Stellung verschiebbar sind, in der die Wandung des Gassacks zu dessen Innenraum hin eingedrückt ist, wobei wenigstens ein Schieber in eine Stellung verschiebbar ist, in der ein Teil der Gasumwandung in das Innere des Gassacks hineingestülpt ist und wobei wenigstens ein eine Stellung verschiebbar ist, in der die Wandung des Gassacks i wobei der Abstand zwischen der Unterlage und der Platte so gewählt ist, daß der zwischen der Unterlage und der Platte entfaltete Gassack eine gegenüber dem aufgeblasenen Zustand abgeplattete Form hat. Mit einer solchen Vorrichtung läßt sich ein Seitenaufprall-Gassack mit minimalem Aufwand automatisch zusammenlegen. Dabei wird die Wandung des Gassacks so zusammengefaltet, daß er sich besonders gut wieder entfaltet.

Gemäß einer bevorzugten Ausführungsform ist vorgesehen, daß die Schieber translatorisch verschiebbar sind und mit einer zur Verschieberichtung senkrechten Fläche am zusammenzulegenden Gassack angreifen. Auf diese Art wirkende Schieber sind konstruktiv besonders einfach auszuführen.

Gemäß der bevorzugten Ausführungsform ist vorgesehen, daß fünf Schieber vorgesehen sind, von denen vier einander paarweise gegenüberliegend angeordnet sind und der fünfte sich schräg zu den übrigen Schiebern erstreckt. Mittels dieser Gestaltung kann die Wandung des Gassacks mittels der vier einander paarweise gegenüberliegenden Schieber in besonders einfacher Weise auf eine solche Größe zusammengeschoben werden, daß der Gassack in eine Aufnahme eingesetzt werden kann. Mittels des fünften Schiebers kann ein Teil der Wandung des Gassacks in dessen Inneres eingestülpt werden.

Weitere Merkmale der Erfindung ergeben sich aus den Unteransprüchen.

Die Erfindung wird nachfolgend unter Bezugnahme auf eine bevorzugte Ausführungsform beschrieben, die in den beigefügten Zeichnungen dargestellt ist. In diesen zeigen:
- Fig. 1 in einer schematischen Draufsicht einen erfindungsgemäßen Gassack, der in einer erfindungsgemäßen Vorrichtung angeordnet ist, um mit einem erfindungsgemäßen Verfahren zusammengelegt zu werden;
- Fig. 2 in einem schematischen Querschnitt die Vorrichtung von Fig. 1;
- Fig. 3 eine Ansicht entsprechend derjenigen von Fig. 1 nach einem ersten Faltungsschritt;
- Fig. 4 eine Ansicht entsprechend derjenigen von Fig. nach einem zweiten Faltungsschritt;
- Fig. 5 eine Ansicht entsprechend derjenigen von Fig. nach einem dritten Faltungsschritt;
- Fig. 6 eine Ansicht entsprechend derjenigen von Fig. 5 nach einem vierten Faltungsschritt; und
- Fig. 7 eine Ansicht entsprechend derjenigen von Fig. nach einem letzten Faltungsschritt.

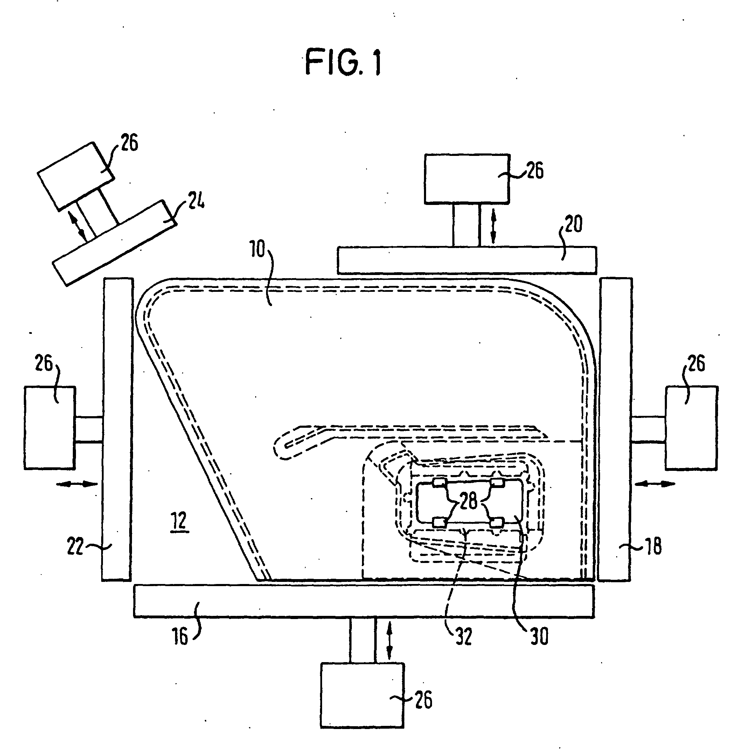

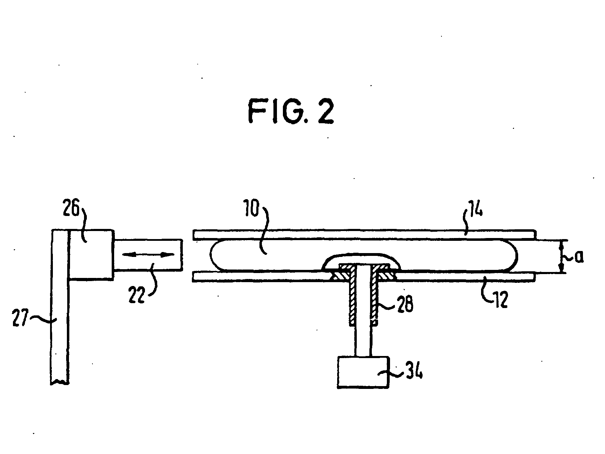

In den Figuren 1 und 2 ist schematisch eine Vorrichtung dargestellt, mit der ein in diesen Figuren ebenfalls dargestellter Gassack 10 zusammengelegt werden kann. Diese Vorrichtung besteht im wesentlichen aus einer Unterlage 12, auf welcher der zusammenzulegende Gassack 10 ausgebreitet werden kann, einer Platte 14, die parallel zu der Unterlage 12 und in einem Abstand a von dieser angeordnet werden kann, so daß sich der zusammenzulegende Gassack 10 zwischen der Unterlage 12 und der Platte 14 befindet, sowie mehreren Schiebern 16, 18, 20, 22, 24, mit denen die Wandung des Gassacks 10 zusammengeschoben werden kann. Diese Schieber können mit jeweils einer schematisch dargestellten Betätigungsvorrichtung 26 translatorisch verstellt werden, wobei die Verstellrichtung senkrecht zu der Fläche ist, mit der die Schieber an der Wandung des Gassacks angreifen. Die Betätigungsvorrichtungen 26 sind an einem schematisch dargestellten Maschinenrahmen 27 befestigt. Die in den Figuren 1 und 2 dargestellte Vorrichtung enthält außerdem eine schematisch dargestellte Spannvorrichtung 28, mit der die Berandung der Einblasöffnung 30 des Gassacks 10 an der Unterlage 12 festgespannt werden kann. Die Spannvorrichtung 28 kann dabei an einem Haltering 32 angreifen, der in das Innere des Gassacks eingelegt ist und die Einblasöffnung stabilisiert. Die in den Figuren 1 und 2 dargestellte Vorrichtung zum Zusammenlegen des Seitenaufprall-Gassacks enthält außerdem eine Druckbeaufschlagungsvorrichtung 34, die mit dem Innenraum des Gassacks 10 in Strömungsverbindung steht.

Nachfolgend wird beschrieben, wie ein Seitenaufprall-Gassack mittels der dargestellten Vorrichtung und dem erfindungsgemäßen Verfahren zusammengelegt werden kann. Zuerst wird der zusammenzulegende Gassack 10 auf der Unterlage 12 ausgebreitet. Anschließend wird die Berandung seiner Einblasöffnung 30 mittels der Spannvorrichtung 28 an der Unterlage 12 fixiert.

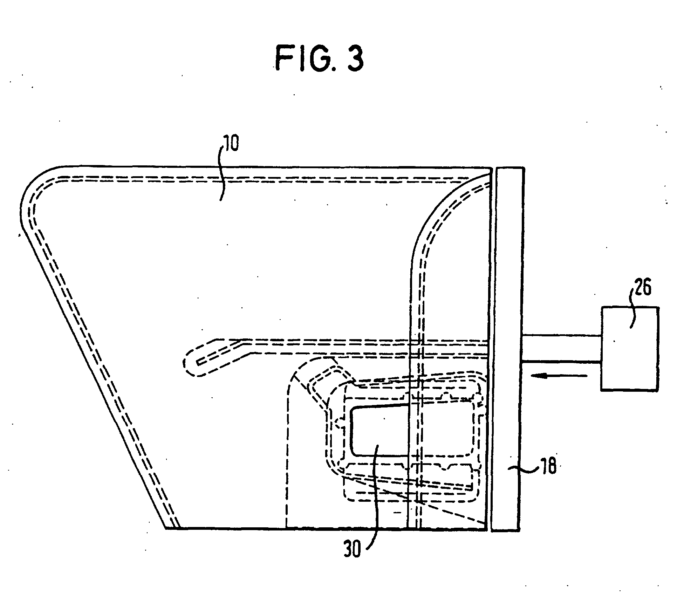

Anschließend wird ein Teil der Wandung entlang einem ersten Rand des Gassacks umgeschlagen. Dies ist in Fig. 3 dargestellt, in der zur besseren Übersichtlichkeit sämtliche Elemente der Vorrichtung zum Zusammenlegen des Gassacks weggelassen wurden, die bei diesem Schritt nicht benötigt werden. Bei der dargestellten Ausführungsform wird die Wandung entlang dem rechten Rand des Gassacks 10 umgeschlagen, wobei die Wandung genau so weit umgeschlagen ist, daß der gebildete neue Rand des Gassacks mit der gewünschten Außenkontur des zu erzielenden zusammengelegten Gassacks zusammenfällt. Anders ausgedrückt entspricht der Abstand von der neuen Außenkante des Gassacks 10 am rechten Rand bis beispielsweise zur Mitte der Einblasöffnung dem Abstand, den auch der fertig zusammengelegte Gassack zwischen der Mitte der Einblasöffnung und seinem rechten Außenrand aufweist.

Anschließend wird der umgeschlagene Teil der Wandung des Gassacks 10 in dieser Stellung fixiert. Dies geschieht zum einen dadurch, daß der Schieber 18 so weit vorgeschoben wird, bis er wieder am rechten Außenrand des Gassacks 10 anliegt. Dies geschieht zum anderen dadurch, daß parallel zur Unterlage 12 und in einem Abstand a von dieser die Platte 14 angeordnet wird, so daß der zusammenzulegende Gassack 10 zwischen der Unterlage 12 und der Platte 14 liegt. Anschließend wird der Gassack 10 zwischen der Unterlage 12 und der Platte 14 entfaltet, indem mittels der Druckbeaufschlagungsvorrichtung 34 an den Innenraum des Gassacks 10 ein Überdruck angelegt wird. Zum Entfalten des Gassacks 10 wird ein Überdruck verwendet, der kleiner als 100.000 Pa ist. Vorzugsweise wird ein Überdruck in der Größenordnung von 50.000 Pa verwendet. Durch das Entfalten des Gassacks 10 zwischen der Unterlage 12 und der Platte 14 wird der eingeschlagene Teil der Wandung des Gassacks endgültig in seiner Stellung fixiert.

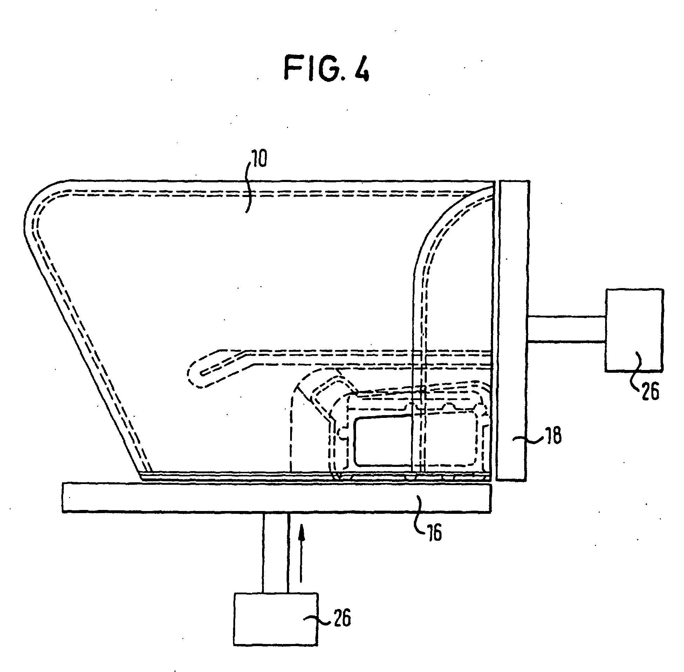

Anschließend wird die Wandung des Gassacks 10 an einem zum ersten Rand senkrechten zweiten Rand, nämlich dem bezüglich der Figuren unteren Rand des Gassacks, zur Mitte des Gassacks hin zusammengeschoben, wobei auch hier die Wandung des Gassacks so weit zusammengeschoben wird, daß an diesem Rand die gewünschten Abmessungen des fertig zusammengelegten Gassacks erzielt werden (siehe Fig. 4). Während des Zusammenschiebens der Wandung des Gassacks am zweiten Rand mittels des Schiebers 16 kann ein Teil des Innenvolumens über die Durchbeaufschlagungsvorrichtung 34 aus dem Innenraum des Gassacks entweichen, so daß dort kein übermäßig hoher Druck aufgebaut wird.

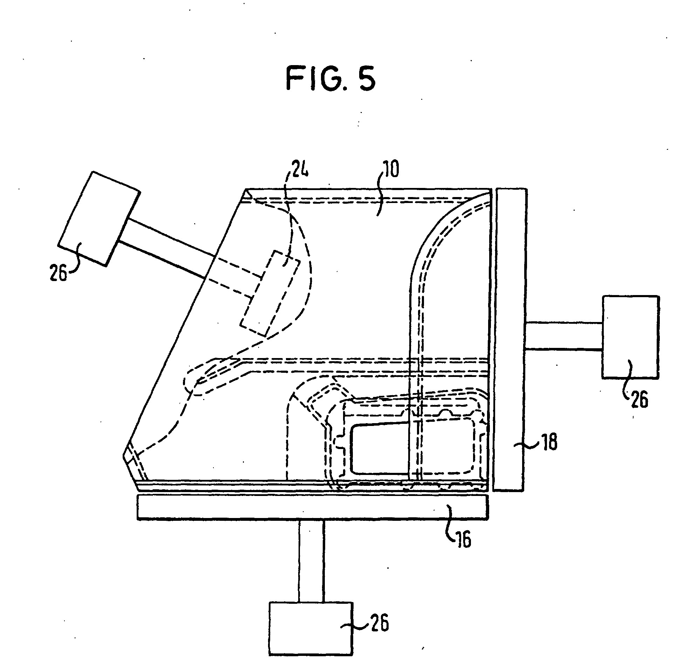

Anschließend wird ein Teil der Wandung ausgehend von einem Bereich, der dem ersten und dem zweiten Rand etwa diametral gegenüberliegt, in das Innere des Gassacks 10 hinein eingestülpt (siehe Fig. 5). Dies geschieht mittels des Schiebers 24, der bezüglich der zueinander senkrecht stehenden Schieber 16, 18 schräg angeordnet ist und einen Teil der Wandung in Richtung der Einblasöffnung des Gassacks drückt. Dies ist problemlos möglich, da der Gassack 10 zwischen der Unterlage 12 und der Platte 14 in einem entfalteten Zustand vorliegt. Während des Eintauchens des Schiebers 24 in das Innere des Gassacks kann selbstverständlich wieder ein Teil des Innenvolumens des Gassacks aus diesem heraus entweichen.

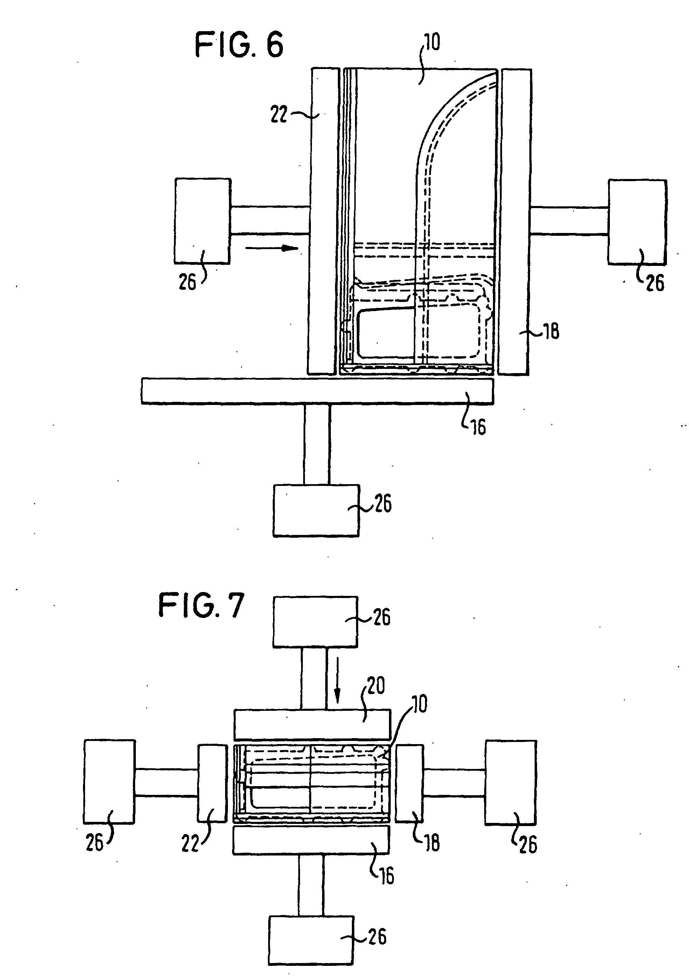

Nach diesem Schritt wird an den Innenraum des Gassacks 10 ein Unterdruck angelegt, so daß dieser in der in Fig. 5 dargestellten Stellung fixiert wird. Anschließend kann der Schieber 24 aus dem Inneren des Gassacks 10 herausgezogen werden. Danach wird ein dem ersten Rand gegenüberliegender Rand des Gassacks 10, also der bezüglich der Figuren linke Rand des Gassacks, mittels des Schiebers 22 zusammengeschoben (siehe Fig. 6). Auch hierbei wird die Wandung so weit zusammengeschoben, daß bereits das endgültige Packmaß erreicht wird.

Als letzter Schritt wird der Gassack an einem dem zweiten Rand gegenüberliegenden vierten Rand, also dem bezüglich der Figuren oberen Rand, mittels des Schiebers 20 zusammengeschoben. Der vierte Rand des Gassacks 10 wird dabei so weit geschoben, daß das endgültige Packmaß des zusammengelegten Gassacks erzielt wird. Dies ist in Fig. 7 dargestellt. Auch hier wird an den Innenraum des Gassacks ein Unterdruck angelegt, um den Gassack in der gezeigten Stellung zu fixieren, während beispielsweise eine Banderole um den Gassack gelegt wird. Der zusammengelegte Gassack kann dann problemlos gehandhabt werden. Es ist auch möglich, den zusammenzulegenden Gassack 10 bereits vormontiert mit einem Gehäuse an der Unterlage 12 festzuspannen, so daß der Gassack 10, nachdem er auf das zu erzielende Packmaß zusammengelegt wurde, direkt in das Gehäuse hineingeschoben werden kann. Anschließend kann beispielsweise eine Abdeckung am Gehäuse angebracht werden, so daß eine vorgefertigte Baugruppe mit zusammengelegtem Gassack erhalten ist.

Der auf die dargestellte Weise zusammengelegte Gassack zeichnet sich dadurch aus, daß seine Wandung in einer Vielzahl von kleinen unregelmäßigen Einzelfalten angeordnet ist. Vorgegeben und jederzeit reproduzierbar ist lediglich die grundsätzliche Verteilung der Wandung mittels des eingestülpten Teils der Wandung und des umgeschlagenen Teils der Wandung. In Abhängigkeit von der jeweils gewählten Richtung, in der ein Teil der Wandung mittels des Schiebers 26 in den Innenraum des Gassacks hineingestülpt wird, und in Abhängigkeit von der Größe des eingestülpten Wandungsteils läßt sich das erfindungsgemäße Verfahren zum Zusammenlegen eines Gassacks an jeden zusammenzulegenden Seitenaufprall-Gassack und an die jeweils vorhandenen Einbauverhältnisse für diesen Seitenaufprall-Gassack anpassen.

## Patentansprüche

1. Verfahren zum Zusammenlegen eines Seitenaufprall-Gassacks (10) für ein Fahrzeuginsassen-Rückhaltesystem, dessen Gassack (10) im aufgeblasenen Zustand die Form eines Kissens hat und mit einer Einblasöffnung (30) in einer der Seitenflächen versehen ist, wobei das Verfahren die folgenden Schritte aufweist:
- der Gassack (10) wird auf einer Unterlage (12) ausgebreitet;
- die Berandung der Einblasöffnung (30) des Gassacks (10) wird fixiert;
- es wird eine Platte (14) in einem vorbestimmten Abstand (a) von der Unterlage (12) und parallel zu dieser so angeordnet, daß der Gassack (10) zwischen der Unterlage (12) und der Platte (14) liegt;
- der Gassack (10) wird zwischen der Unterlage (12) und der Platte (14) aufgeblasen;
- ein Teil der Wandung des Gassacks (10) wird in dessen Innenraum hinein eingestülpt;
- die Wandung des Gassacks (10) wird so von außen nach innen zusammengeschoben, daß die Wandung eine Vielzahl von unregelmäßig verlaufenden Einzelfalten aufweist.

2. Verfahren nach Anspruch 1, **dadurch gekennzeichnet, daß** außerdem die folgenden Schritte ausgeführt werden:
- die Wandung des Gassacks (10) wird entlang einem Rand des Gassacks (10) umgeschlagen;
- der umgeschlagene Teil der Wandung wird in dieser Stellung fixiert;
- die Wandung an einem zum genannten ersten Rand im wesentlichen senkrechten zweiten Rand des Gassacks (10) wird zur Einblasöffnung (30) hin geschoben;
- die Wandung wird an einem zum ersten Rand des Gassacks (10) entgegengesetzten dritten Rand zur Einblasöffnung (30) hin geschoben;
- die Wandung wird an einem zum zweiten Rand des Gassacks (10) entgegengesetzten vierten Rand zur Einblasöffnung (30) hin geschoben.

3. Verfahren nach Anspruch 2, **dadurch gekennzeichnet, daß** die Wandung ausgehend von einer Stelle, die gegenüber dem Schnittpunkt zwischen dem ersten und dem zweiten Rand liegt, zur Mitte des Gassacks (10) hin in dessen Innenraum hinein eingestülpt wird.

4. Verfahren nach einem der vorhergehenden Ansprüche, **dadurch gekennzeichnet, daß** während des Zusammenlegens ein Unterdruck an den Innenraum des Gassacks (10) angelegt wird.

5. Verfahren nach Anspruch 4, **dadurch gekennzeichnet, daß** der Unterdruck nach dem Einstülpen der Wandung an den Innenraum des Gassacks (10) angelegt wird.

6. Verfahren nach einem der vorhergehenden Ansprüche, **dadurch gekennzeichnet, daß** der Innenraum des Gassacks (10), damit sich der Gassack (10) zwischen der Unterlage (12) und der Platte (14) entfaltet, mit einem Überdruck von weniger als 100000 Pa beaufschlagt wird.

7. Verfahren nach Anspruch 6, **dadurch gekennzeichnet, daß** der Innenraum des Gassacks (10) mit einem Druck von etwa 50000 Pa beaufschlagt wird.

8. Verfahren nach einem der vorhergehenden Ansprüche, **dadurch gekennzeichnet, daß** das nach der Druckbeaufschlagung im Innenraum des Gassacks (10) enthaltene Gas während des Zusammenschiebens der Wandung entweichen kann.

9. Verfahren nach einem der vorhergehenden Ansprüche, **dadurch gekennzeichnet, daß** die Berandung der Einblasöffnung (30) in einer für den zusammengelegten Gassack (10) vorgesehenen Aufnahme befestigt wird.

10. Verfahren nach Anspruch 9, **dadurch gekennzeichnet, daß** die Wandung des Gassacks (10) jeweils so weit zur Einblasöffnung (30) hin geschoben wird, daß der zusammengelegte Gassack (10) direkt in seine Aufnahme eingesetzt werden kann.

11. Verfahren nach Anspruch 10, **dadurch gekennzeichnet, daß** der Gassack (10) nach dem Zusammenlegen unmittelbar in seine Aufnahme eingesetzt wird.

12. Verfahren nach einem der vorhergehenden Ansprüche, **dadurch gekennzeichnet, daß** der Gassack (10) nach dem Zusammenlegen in seinem Zustand fixiert wird.

13. Verfahren nach einem der vorhergehenden Ansprüche, **dadurch gekennzeichnet, daß** der vorbestimmte Abstand (a) zwischen der Unterlage (12) und der Platte (14) etwa der Packhöhe des zusammengelegten Gassacks (10) entspricht.

14. Zusammengelegter Seitenaufprall-Gassack (10) für ein Fahrzeuginsassen-Rückhaltesystem, der im aufgeblasenen Zustand die Form eines Kissens mit einem ersten und einem dazu im wesentlichen senkrechten zweiten Rand hat, und der mit einer Einblasöffnung (30) in einer der Seitenflächen versehen ist, **dadurch gekennzeichnet, daß** ein Teil der Wandung an einer Stelle, die gegenüber dem Schnittpunkt zwischen dem ersten und dem zweiten Rand des Gassacks (10) liegt, zur Mitte des Gassacks hin in dessen Inneres eingestülpt ist und daß die Wandung des Gassacks eine Vielzahl von unregelmäßig verlaufenden Einzelfalten aufweist.

15. Zusammengelegter Gassack (10) nach Anspruch 14, **dadurch gekennzeichnet, daß** er eine im wesentlichen ebene Oberseite und eine im wesentlichen ebene Unterseite hat, in deren Ebene die Einblasöffnung (30) liegt.

16. Zusammengelegter Gassack (10) nach Anspruch 15, **dadurch gekennzeichnet, daß** er einen im wesentlichen rechteckigen Umfang hat.

17. Zusammengelegter Gassack (10) nach einem der Ansprüche 14 bis 16, **dadurch gekennzeichnet, daß** seine Wandung eine Vielzahl von unregelmäßig verlaufenden Einzelfalten aufweist.

18. Vorrichtung zum Zusammenlegen eines Seitenaufprall-Gassacks (10) für ein Fahrzeuginsassen-Rückhaltesystem, mit einer Unterlage (12), auf der ein zusammenzulegender Gassack (10) ausgebreitet werden kann, einer Spannvorrichtung (28), mit der die Berandung der Einblasöffnung (30) fixiert werden kann, einer Platte (14), die parallel zu der Unterlage (12) und in einem Abstand (a) von dieser angeordnet werden kann, einer Vorrichtung (34) zur Druckbeaufschlagung des Innenraums des mittels der Spannvorrichtung (28) fixierten Gassacks (10), sowie mehreren Schiebern (16, 18, 20, 22, 24), die zwischen einer von dem Umfang des zwischen der Unterlage (12) und der Platte (14) entfalteten Gassacks (10) beabstandeten Stellung und einer Stellung verschiebbar sind, in der die Wandung des Gassacks (10) zu dessen Innenraum hin eingedrückt ist, wobei wenigstens ein Schieber in eine Stellung verschiebbar ist, in der ein Teil der Gassackwandung in das Innere des Gassacks hineingestülpt ist, wobei wenigstens ein Schieber in eine Stellung verschiebbar ist, in der die Wandung des Gassacks in einer Vielzahl von unregelmäßig verlaufenden Einzelfalten zusammengeschoben ist, und wobei der Abstand (a) zwischen der Unterlage (12) und der Platte (14) so gewählt ist, daß der zwischen der Unterlage (12) und der Platte (14) entfaltete Gassack (10) eine gegenüber dem aufgeblasenen Zustand abgeplattete Form hat.

19. Vorrichtung nach Anspruch 18, **dadurch gekennzeichnet, daß** die Vorrichtung (34) zur Druckbeaufschlagung an den Innenraum des Gassacks (10) einen Unterdruck anlegen kann.

20. Vorrichtung nach einem der Ansprüche 18 und 19, **dadurch gekennzeichnet, daß** der Innenraum des Gassacks (10) mittels der Vorrichtung (34) zur Druckbeaufschlagung entlüftet werden kann.

21. Vorrichtung nach einem der Ansprüche 18 bis 20, **dadurch gekennzeichnet, daß** die Vorrichtung (34) zur Druckbeaufschlagung an den Innenraum des Gassacks (10) einen Überdruck in der Größenordnung von 50000 bis 100000 Pa anlegen kann.

22. Vorrichtung nach einem der Ansprüche 18 bis 21, **dadurch gekennzeichnet, daß** der Abstand (a) zwischen der Platte (14) und der Unterlage (12) etwa der Packhöhe des zusammengelegten Gassacks (10) entspricht.

23. Vorrichtung nach einem der Ansprüche 18 bis 22, **dadurch gekennzeichnet, daß** die Schieber (16, 18, 20, 22, 24) translatorisch verschiebbar sind und mit einer zur Verschieberichtung senkrechten Fläche am zusammenzulegenden Gassack (10) angreifen.

24. Vorrichtung nach Anspruch 23, **dadurch gekennzeichnet, daß** fünf Schieber (16, 18, 20, 22, 24) vorgesehen sind, von denen vier (16, 18, 20, 22) einander paarweise gegenüberliegend angeordnet sind und der fünfte (24) sich schräg zu den übrigen Schiebern (16, 18, 20, 22) erstreckt.

25. Vorrichtung nach Anspruch 24, **dadurch gekennzeichnet, daß** die einander gegenüberliegenden Schieber (16, 20) eines Paares zu denjenigen (18, 22) des anderen Paares senkrecht angeordnet sind.

26. Vorrichtung nach Anspruch einem der Ansprüche 24 und 25, **dadurch gekennzeichnet, daß** der fünfte Schieber (24) im Bereich einer Ecke eines Rechtecks angeordnet ist, das von den übrigen vier Schiebern (16, 18, 20, 22) im Ruhezustand definiert ist.

## Claims

1. A method of folding a side impact gas bag (10) for a vehicle occupant restraint system, the gas bag (10) of which has the form of a cushion in the inflated state and is provided with an inflation opening (30) in one of the side faces, the method comprising the following steps:
- the gas bag (10) is spread out on a base (12);
- the rim of the inflation opening (30) of the gas bag (10) is fixed;
- a plate (14) is arranged at a predetermined distance (a) from the base (12) and parallel thereto such that the gas bag (10) lies between the base (12) and the plate (14);
- the gas bag (10) is inflated between the base (12) and the plate (14);
- a part of the wall of the gas bag (10) is turned into the interior of the gas bag;
- the wall of the gas bag (10) is pushed together from the outside inwards in such a manner that the wall has a multitude of irregularly extending individual folds.

2. The method according to claim 1, **characterized in that** in addition the following steps are carried out:
- the wall of the gas bag (10) is turned over along an edge of the gas bag (10);
- the turned-over part of the wall is fixed in this position;
- the wall on a second edge of the gas bag (10) substantially perpendicular to said first edge is pushed towards the inflation opening (30);
- the wall on a third edge opposite to the first edge of the gas bag (10) is pushed towards the inflation opening (30);
- the wall on a fourth edge opposite to the second edge of the gas bag (10) is pushed towards the inflation opening (30).

3. The method according to claim 2, **characterized in that** the wall, starting from a point which lies opposite the point of intersection between the first and the second edge, is pushed towards the centre of the gas bag (10) into its interior.

4. The method according to any one of the preceding claims, **characterized in that** an underpressure is applied to the interior of the gas bag (10) during folding.

5. The method according to claim 4, **characterized in that** the underpressure is applied to the interior of the gas bag (10) after turning in the wall.

6. The method according to any one of the preceding claims, **characterized in that** the interior of the gas bag (10) is acted upon by an excess pressure of less than 100000 Pa so that the gas bag (10) unfolds between the base (12) and the plate (14).

7. The method according to claim 6, **characterized in that** the interior of the gas bag (10) is acted upon by a pressure of approximately 50000 Pa.

8. The method according to any one of the preceding claims, **characterized in that** the gas contained in the interior of the gas bag (10) after the application of pressure can escape during pushing the wall together.

9. The method according to any one of the preceding claims, **characterized in that** the rim of the inflation opening (30) is secured in an accommodation provided for the folded gas bag (10).

10. The method according to claim 9, **characterized in that** the wall of the gas bag (10) is in each case pushed so far towards the inflation opening (30) that the folded gas bag (10) can be inserted directly into its accommodation.

11. The method according to claim 10, **characterized in that** the gas bag (10) is immediately inserted into its accommodation after folding.

12. The method according to any one of the preceding claims, **characterized in that** the gas bag (10) is fixed in its state after folding.

13. The method according to any one of the preceding claims, **characterized in that** the predetermined distance (a) between the base (12) and the plate (14) corresponds approximately to the packing height of the folded gas bag (10).

14. A folded side impact gas bag (10) for a vehicle occupant restraint system, which in the inflated state has the form of a cushion with a first edge and a second edge substantially perpendicular thereto, and which is provided with an inflation opening (30) in one of the side faces, **characterized in that** a part of the wall is turned into the interior of the gas bag (10) towards the centre of the gas bag at a point which lies opposite the point of intersection between the first and second edges of the gas bag (10), and that the wall of the gas bag has a multitude of irregularly extending individual folds.

15. The folded gas bag (10) according to claim 14, **characterized in that** it has a substantially flat upper side and a substantially flat lower side, in the plane of which the inflation opening (30) lies.

16. The folded gas bag (10) according to claim 15, **characterized in that** it has a substantially rectangular periphery.

17. The folded gas bag (10) according to any one of claims 14 to 16, **characterized in that** its wall has a multitude of irregularly extending individual folds.

18. A device for folding a side impact gas bag (10) for a vehicle occupant restraint system, comprising a base (12) on which a gas bag (10) to be folded can be spread out, a clamping device (28) by which the rim of the inflation opening (30) can be fixed, a plate (14) which can be arranged parallel to the base (12) and at a distance (a) therefrom, a device (34) for the application of pressure to the interior of the gas bag (10) which is fixed by means of the clamping device (28), and a plurality of sliders (16, 18, 20, 22, 24) which are displaceable between a position spaced apart from the periphery of the gas bag (10) unfolded between the base (12) and the plate (14), and a position in which the wall of the gas bag (10) is pressed in towards its interior, at least one slider being displaceable into a position in which a part of the gas bag wall is turned into the interior of the gas bag, at least one slider being displaceable into a position in which the wall of the gas bag is pushed together in a multitude of irregularly extending individual folds, and the distance (a) between the base (12) and the plate (14) being so selected that the gas bag (10) unfolded between the base (12) and the plate (14) has, compared with the inflated state, a flattened form.

19. The device according to claim 18, **characterized in that** the device (34) for the application of pressure can apply an underpressure to the interior of the gas bag (10).

20. The device according to either one of claims 18 and 19, **characterized in that** the interior of the gas bag (10) can be vented by means of the device (34) for the application of pressure.

21. The device according to any one of claims 18 to 20, **characterized in that** the device (34) for the application of pressure can apply an excess pressure in the order of 50000 to 100000 Pa to the interior of the gas bag (10).

22. The device according to any one of claims 18 to 21, **characterized in that** the distance (a) between the plate (14) and the base (12) corresponds approximately to the packing height of the folded gas bag (10).

23. The device according to any one of claims 18 to 22, **characterized in that** the sliders (16, 18, 20, 22, 24) are displaceable in a translatory manner and engage the gas bag (10) to be folded by a surface perpendicular to the direction of displacement.

24. The device according to claim 23, **characterized in that** five sliders (16, 18, 20, 22, 24) are provided, four of which (16, 18, 20, 22) are arranged lying opposite each other in pairs, and the fifth (24) extends obliquely to the other sliders (16, 18, 20, 22).

25. The device according to claim 24, **characterized in that** the sliders (16, 20) of one pair lying opposite each other are arranged perpendicularly to those (18, 22) of the other pair.

26. The device according to either one of claims 24 and 25, **characterized in that** the fifth slider (24) is arranged in the region of a corner of a rectangle which is defined by the other four sliders (16, 18, 20, 22) in the state of rest.

## Revendications

1. Procédé de pliage d'un coussin à gaz (10) contre les chocs latéraux pour un système de retenue d'occupants de véhicule dont le coussin à gaz (10) possède, à l'état gonflé, la forme d'un oreiller et est pourvu d'un orifice de gonflage (30) sur l'une de ses faces latérales, le procédé comportant les étapes suivantes :
- le coussin à gaz (10) est étalé sur un support (12) ;
- le bord de l'orifice de gonflage (30) du coussin à gaz (10) est immobilisé ;
- une plaque (14) est disposée à une distance prédéterminée (a) du support (12) et parallèlement à celui-ci, de façon que le coussin à gaz (10) se trouve entre le support (12) et la plaque (14) ;
- le coussin à gaz (10) est gonflé entre le support (12) et la plaque (14) ;
- une partie de la paroi du coussin à gaz (10) est rentrée dans la cavité intérieure de celui-ci ;
- la paroi du coussin à gaz (10) est repoussée de l'extérieur vers l'intérieur de telle sorte que la paroi présente une multitude de plis individuels selon des tracés irréguliers.

2. Procédé selon la revendication 2, **caractérisé en ce que** les étapes suivantes sont également réalisées :
- la paroi du coussin à gaz (10) est rabattue le long d'un bord du coussin à gaz (10);
- la partie rabattue de la paroi est immobilisée dans cette position ;
- la paroi au niveau d'un deuxième bord du coussin à gaz (10) sensiblement perpendiculaire au premier bord est poussée vers l'orifice de gonflage (30) ;
- la paroi au niveau d'un troisième bord situé à l'opposé du premier bord du coussin à gaz (10) est poussée vers l'orifice de gonflage (30) ;
- la paroi au niveau d'un quatrième bord situé à l'opposé du deuxième bord du coussin à gaz (10) est poussée vers l'orifice de gonflage (30).

3. Procédé selon la revendication 2, **caractérisé en ce que**, à partir d'un point situé à l'opposé du point d'intersection entre le premier et le deuxième bord, la paroi est rentrée dans la cavité intérieure du coussin à gaz (10) vers le centre de celui-ci.

4. Procédé selon l'une des revendications précédentes, **caractérisé en ce qu'**au cours du pliage, une dépression est appliquée à la cavité intérieure du coussin à gaz (10).

5. Procédé selon la revendication 4, **caractérisé en ce que** la dépression est appliquée à la cavité intérieure du coussin à gaz (10) après rentrage de la paroi.

6. Procédé selon l'une des revendications précédentes, **caractérisé en ce que** la cavité intérieure du coussin à gaz (10) est soumise à une surpression inférieure à 100 000 Pa pour que le coussin à gaz (10) se déploie entre le support (12) et la plaque (14).

7. Procédé selon l'une des revendications précédentes, **caractérisé en ce que** la cavité intérieure du coussin à gaz (10) est soumise à une pression d'environ 50 000 Pa.

8. Procédé selon l'une des revendications précédentes, **caractérisé en ce que** le gaz contenu dans la cavité intérieure du coussin à gaz (10) après la mise en pression peut s'échapper lorsque la paroi est repoussée.

9. Procédé selon l'une des revendications précédentes, **caractérisé en ce que** le bord de l'orifice de gonflage (30) est fixé dans un logement prévu pour le coussin à gaz (10) plié.

10. Procédé selon la revendication 9, **caractérisé en ce que** la paroi du coussin à gaz (10) est poussée chaque fois en direction de l'orifice de gonflage (30) jusqu'à ce que le coussin à gaz (10) plié puisse être inséré directement dans son logement.

11. Procédé selon la revendication 10, **caractérisé en ce qu'**après le pliage, le coussin à gaz (10) est inséré directement dans son logement.

12. Procédé selon l'une des revendications précédentes, **caractérisé en ce que** le coussin à gaz (10) est immobilisé dans son état après le pliage.

13. Procédé selon l'une des revendications précédentes, **caractérisé en ce que** la distance prédéterminée (a) entre le support (12) et la plaque (14) correspond environ à la hauteur d'emballage du coussin à gaz (10) plié.

14. Coussin à gaz (10) plié contre les chocs latéraux pour un système de retenue d'occupants de véhicule, qui, à l'état gonflé, possède la forme d'un oreiller avec un premier bord et un deuxième bord sensiblement perpendiculaire à celui-ci, et qui est pourvu d'un orifice de gonflage (30) dans l'une de ses faces latérales, **caractérisé en ce qu'**une partie de la paroi est rentrée à l'intérieur du coussin à gaz vers son intérieur, à un endroit situé en vis-à-vis du point d'intersection entre le premier bord et le deuxième bord du coussin à gaz (10), qu'elle est rentrée dans la cavité intérieure du coussin à gaz vers le centre de celui-ci, et **en ce que** la paroi du coussin à gaz (10) présente une multitude de plis individuels selon des tracés irréguliers.

15. Coussin à gaz (10) plié selon la revendication 14, **caractérisé en ce qu'**il possède une face supérieure sensiblement plane et une face inférieure sensiblement plane, dans le plan de laquelle se trouve l'orifice de gonflage (30).

16. Coussin à gaz (10) plié selon la revendication 15, **caractérisé en ce qu'**il possède un périmètre sensiblement rectangulaire.

17. Coussin à gaz plié (10) selon l'une quelconque des revendications 14 à 16, **caractérisé en ce que** sa paroi comporte une pluralité de plis individuels selon des tracés irréguliers.

18. Dispositif pour plier un coussin à gaz (10) contre les chocs latéraux pour un système de retenue d'occupants de véhicule, comprenant un support (12) sur lequel peut être étalé un coussin à gaz (10) à plier, un dispositif de serrage (28) permettant d'immobiliser le bord de l'orifice de gonflage (30), une plaque (14) pouvant être disposée parallèlement au support (12) et à une distance (a) de celui-ci, un dispositif (34) de mise sous pression de la cavité intérieure du coussin à gaz (10) immobilisé au moyen du dispositif de serrage (28), ainsi que plusieurs poussoirs (16, 18, 20, 22, 24) qui peuvent coulisser entre une position qui est distante du périmètre du coussin à gaz (10) déployé entre le support (12) et la plaque (14) et une position dans laquelle la paroi du coussin à gaz (10) est pressée vers la cavité intérieure de celui-ci, au moins un poussoir pouvant coulisser dans une position dans laquelle une partie de la paroi du coussin à gaz est rentrée dans la cavité intérieure du coussin à gaz, au moins un poussoir pouvant coulisser dans une position dans laquelle la paroi du coussin à gaz est repoussée en une multitude de plis individuels selon des tracés irréguliers, la distance (a) entre le support (12) et la plaque (14) étant calculée pour que le coussin à gaz (10) déployé entre le support (12) et la plaque (14) ait une forme aplatie par rapport à l'état gonflé.

19. Dispositif selon la revendication 18, **caractérisé en ce que** le dispositif (34) de mise sous pression peut appliquer une dépression à la cavité intérieure du coussin à gaz (10).

20. Dispositif selon l'une des revendications 18 et 19, **caractérisé en ce que** la cavité intérieure du coussin à gaz peut être purgée au moyen du dispositif (34) de mise sous pression.

21. Dispositif selon l'une des revendications 18 à 20, **caractérisé en ce que** le dispositif (34) de mise sous pression de la cavité intérieure du coussin à gaz (10) peut appliquer une surpression de l'ordre de 50 000 à 10 000 Pa.

22. Dispositif selon l'une des revendications 18 à 21, **caractérisé en ce que** la distance (a) entre la plaque (14) et le support (12) correspond environ à la hauteur d'emballage du coussin à gaz plié (10).

23. Dispositif selon l'une des revendications 18 à 22, **caractérisé en ce que** les poussoirs (16, 18, 20, 22, 24) sont déplaçables en translation et agissent sur le coussin à gaz (10) à plier au moyen d'une face perpendiculaire à leur sens de déplacement.

24. Dispositif selon la revendication 23, **caractérisé en ce qu'**il est prévu cinq poussoirs (16, 18, 20, 22, 24) dont quatre (16, 28, 20, 22) sont disposés par paires en vis-à-vis et le cinquième (24) s'étend en biais par rapport aux autres poussoirs (16, 18, 20, 22).

25. Dispositif selon la revendication 24, **caractérisé en ce que** les poussoirs en vis-à-vis (16, 20) de l'une des paires sont perpendiculaires à ceux (18, 22) de l'autre paire.

26. Dispositif selon l'une ou l'autre des revendications 24 et 24, **caractérisé en ce que** le cinquième poussoir (24) est disposé dans la zone d'un angle d'un rectangle qui est défini par les quatre autres poussoirs (16, 20, 22) en position de repos.
